# Europäisches Patentamt
# European Patent Office
# Office européen des brevets

(19)

(11) Numéro de publication: **0 189 705**

**B1**

(12)

# FASCICULE DE BREVET EUROPÉEN

(45) Date de publication du fascicule du brevet:
25.01.89

(51) Int. Cl.⁴: **G 01 D 5/34,** G 01 D 5/26

(21) Numéro de dépôt: **85402592.1**

(22) Date de dépôt: **20.12.85**

(54) **Dispositif optique de repérage de position.**

(30) Priorité: **21.12.84 FR 8419712**

(43) Date de publication de la demande:
**06.08.86 Bulletin 86/32**

(45) Mention de la délivrance du brevet:
**25.01.89 Bulletin 89/4**

(84) Etats contractants désignés:
**AT BE CH DE GB IT LI LU NL SE**

(56) Documents cité:
**EP-A-0 107 374**
**GB-A-2 071 896**
**US-A-3 502 414**

**PATENTS ABSTRACTS OF JAPAN, vol. 5, no. 182 (P-90) 854 , 20 novembre 1981 & JP - A - 56 111 415 (TOKYO SHIBAURA DENKI K.K.) 03.09.1981**
**PATENTS ABSTRACTS OF JAPAN, vol. 5, no. 182(P-90) 854 , 20 novembre 1981 & JP - A - 56 111 416 (TOKYO SHIBAURA DENKI K.K.) 03,09,1981**

(73) Titulaire: **M.C.B., 11, rue Pierre Lhomme, F-92400 Courbevoie (FR)**

(72) Inventeur: **Renaud, Jean- Marie, 17, rue Pierre Brossolette, F-92400 Courbevoie (FR)**
Inventeur: **Gambs, Paul, 132, Chemin du Petit Bois, F-69130 Ecully (FR)**
Inventeur: **Perrot, Jean- Claude, 8, Allée des Primevères, F-95370 Montigny en Cormeilles (FR)**
Inventeur: **Taillebois, Jacques, Résidence Brigitte 23, rue Ebisoires, F-78370 Plaisir (FR)**

(74) Mandataire: **Lecca, Jean, CABINET PLASSERAUD 84, rue d'Amsterdam, F-75009 Paris (FR)**

EP 0 189 705 B1

## Description

La présente invention concerne les dispositifs optiques de repérage par diascopie de la position d'un élément mobile.

On sait qu'un tel dispositif comprend, d'une part, un disque ou une réglette comportant plusieurs pistes, chacune avec une succession de zones opaqes (réfléchissantes) et de zones transparentes fines alternantes et, d'autre part, un ensemble de lecture comportant, entre autres, une source de lumière et un ou plusieurs photodétecteurs qui détectent pour chaque piste si c'est une zone opaque (réfléchissante) ou une zone transparente qui est présente devant le ou les photodétecteurs; le disque ou la réglette, d'une part, et l'ensemble de lecture, d'autre part, sont mobiles l'un par rapport à l'autre soit en rotation (cas du disque), soit en translation (cas de la réglette). De plus au(x) photodétecteur(s) peut être associée une unité électronique de traitement des signaux émis par le(s) photodétecteur(s).

Généralement l'ensemble des moyens précisés se trouve disposé dans un volume réduit, ou bien, lorsque ces moyens sont éloignés les uns des autres, des conducteurs assurent les liaisons électriques, notamment entre les moyens d'alimentation en énergie, le système opto-électronique constituant ensemble de lecture et l'unité électronique de traitement des signaux.

Dans certaines applications il existe une distance non négligeable entre l'ensemble de lecture et l'unité électronique de traitement des signaux. Il y a lieu d'éviter toute liaison électrique entre ces deux ensembles du fait qu'une telle liaison risquerait d'être perturbée par des parasites, notamment en cas de transmission analogique des signaux entre l'ensemble de lecture et l'unité électronique de traitement des signaux.

Le brevet U.S.A. n 3 502 414 décrit un système électrique optique pour mesurer le déplacement en mettant en oeuvre: un disque avec une échelle graduée, qui se déplace par rapport a plusieurs réticules décalés en position; des lentilles disposées en regard de chaque réticule entre le plan des réticules et le plan du disque, les graduations de l'échelle définis sent plusieurs valves lumineuses; et des fibres optiques, en nombre égal au nombre des réticules et donc au nombre des lentilles, transmettent la lumière vers le disque à travers les réticules et les lentilles. La conjugaison des réticules sur le disque par le truchement des lentilles est en fait utopique pour réaliser un capteur de la technique actuelle qui doit être de très faible dimension; en outre, pour réaliser des images de haute qualité on doit réaliser en fait des conditions de collimation semblables à celles mentionnées comme non appropriées dans le brevet n° 3 502 414, colonne 4 lignes 40 à 44, car, si les conditions prévues dans ces lignes ne sont pas remplies, les réticules seront représentés sur le disque, en raison des phénomènes de diffraction dus à l'insuffisante

ouverture numérique des faisceaux transmis par les fibres optiques, par une véritable bouillie lumineuse qui est incapable de moduler l'énergie lumineuse reçue par les récepteurs; par ailleurs dans un système selon le brevet n° 3 502 414 le contrôle d'équilibrage des énergies entre les différentes voies du faisceau de fibres optiques pose des problèmes très difficiles à résoudre. En outre et surtout, il y a lieu de noter que les fibres optiques sont internes au capteur de ce brevet U.S.A. et ne concernent nullement la transmission d'informations élaborées par le capteur vers une unité de traitement centralisée.

Au contraire l'invention utilise une fibre optique de transmission non galvanique d'informations entre un capteur et une unité de traitement centralisée.

La présente invention vise a permettre de réaliser un dispositif optique de repérage par diascopie de la position d'un élément mobile éloigné de l'unité électronique de traitement des signaux qui représentent cette position, en évitant tout parasite.

Conformément à l'invention, on réalise un dispositif de repérage de position qui est constitué en trois parties, à savoir :
- un capteur de données qui coopère avec l'élément porteur de code de position comportant les pistes codées optiquement;
- un module opto-électronique avec une unité électronique de traitement des signaux; et
- des moyens de transmission optique bi-directionnelle à fibre(s) optique(s);
  et dont
- le module comprend au moins un émetteur opto-electronique de lumière; un coupleur bi-directionnel de faisceau optique; et un lecteur opto-électronique, associé à l'unité de traitement pour traiter les signaux électriques émis par collecteur opto-électronique en réponse à des signaux lumineux; l'alimentation de l'émetteur opto-électronique et du lecteur opto-électronique du module étant assurée par des moyens d'alimentation électrique; et l'émetteur, le coupleur bi-directionnel et le lecteur étant disposés par rapport à une des extrémités des moyens de transmission optique bi-directionnelle de manière que l'émetteur puisse envoyer de la lumière sur cette extrémité, grâce à ce coupleur, et le récepteur recevoir de la lumière depuis cette extrémité, grâce à ce coupleur; et
- ledit capteur comprend, pour coopérer avec l'élément porteur de code de position comportant les pistes codées optiquement: une série de micro-miroirs de modulation par réflexion, à savoir un micro-miroir en regard de chaque piste codée et en face de la seconde extrémité desdits moyens de transmission optique bi-directionnelle et pouvant pivoter entre une première position, dans laquelle il laisse passer la lumière en provenance de cette seconde extrémité des moyens de transmission optique pour qu'elle atteigne la piste codée associée et en retour depuis une zone réfléchissante de cette piste codée vers ladite seconde extrémité, et une seconde position, dans laquelle il réfléchit la lumière en provenance de cette seconde extrémité; des moyens pour solliciter les micro-miroirs dans la seconde position; une unité de commande apte à amener, successivement et cycliquement, les micro-miroirs, un par un, dans la première position; et une source d'alimentation autonome alimentant l'unité de commande.

Avantageusement:

- un système optique est disposé entre la seconde extrémité des moyens de transmission optique et les micro-miroirs, devant le lecteur opto-électronique du module, et/ou entre l'émetteur opto-électronique et la première extrémité des moyens de transmission optiques;

- la source d'alimentation autonome du capteur est constituée avantageusement par une pile électrique, une cellule photovoltaïque alimentée en lumière extérieure par une fibre optique, ou une source d'alimentation locale par microgéneration;

- le coupleur bi-directionnel est un miroir semi-transparent.

L'invention pourra, de toute façon, être bien comprise à l'aide du complément de description qui suit, ainsi qu'à l'aide des dessins ci-annexés, lesquels complément et dessins sont, bien entendu, donnés surtout à titre d'indication.

La figure 1 illustre schématiquement l'ensemble du dispositif optique de repérage de position doté des perfectionnements selon l'invention, en montrant ses trois unités constitutives, à savoir le capteur, les moyens optiques de transmission et le module.

La figure 2 représente les composants des trois unités illustrées sur la figure 1.

La figure 3 illustre la série de micro-miroirs du dispositif des figures 1 et 2.

La figure 4 illustre une variante de la figure 3.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un dispositif optique de repérage de position, on s'y prend comme suit ou d'une manière analogue.

L'invention est décrite ci-après dans un mode de réalisation préféré s'appliquant au repérage d'une position angulaire, l'organe mobile d'axe X-X portant, solidaire de lui en rotation, un disque codé 1 avec plusieurs pistes codées concentriques, chacune avec une succession de très fines zones alternativement opaques (réfléchissantes) et transparentes dans le sens périphérique.

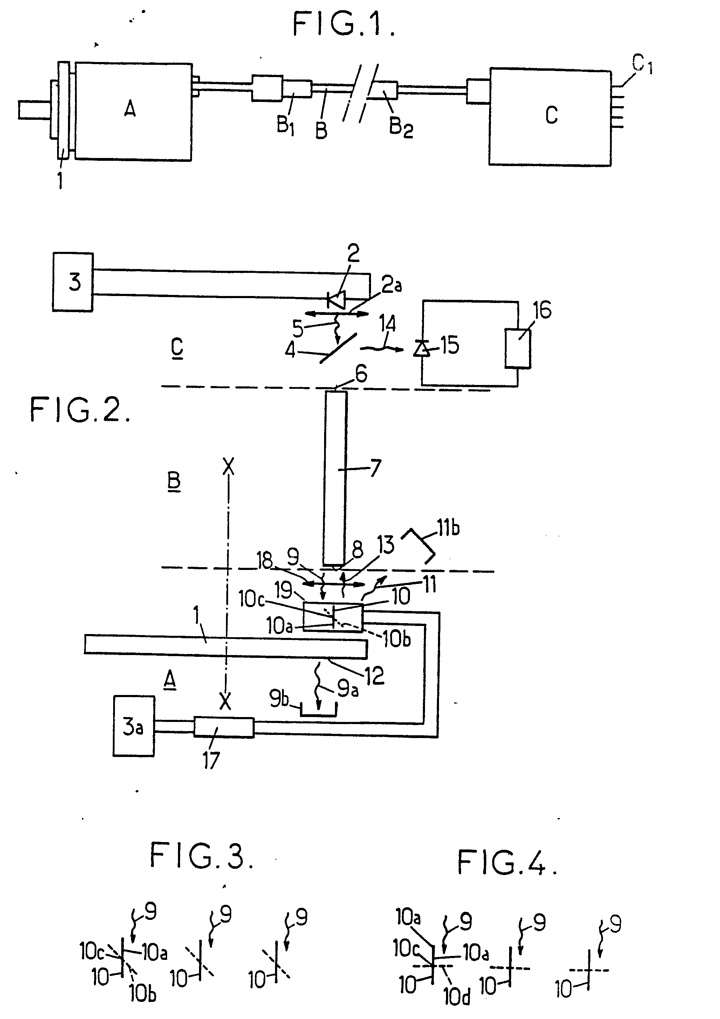

En se référant plus particulièrement à la figure 2 sur laquelle on a séparé par des traits interrompus le capteur A, le système à fibre(s) optique(s) de transmission lumineuse B constitué par exemple par un câble optique à une ou plusieurs fibres, et le module opto-électronique C (ensembles A, B et C que l'on retrouve sur la figure 1), on voit que l'appareil selon l'invention comprend essentiellement:

- un premier émetteur opto-électronique de lumière 2, constitué par exemple par une diode électroluminescente et alimenté par des moyens d'alimentation 3, par exemple extérieurs et constitués par la source générale d'électricité qui est disponible;

- un coupleur bi-directionnel de faisceau optique, constitué par exemple par un miroir semi-transparent 4;

- un système optique 2a qui fait converger sur la surface 6 constituant la première extrémité du système de transmission optique B (réalisé par exemple au moyen d'au moins une fibre optique 7) la lumière 5 émise par l'émetteur opto-électronique 2 et traversant le miroir semi-transparent 4;

- un système optique 18, disposé en regard de la surface 8 constituant la seconde extrémité des moyens de transmission à fibre(s) optique(s) 7, pour contrôler les rayons 9 en provenance de cette, ou ces, fibres optiques;

- une série 19 de micro-miroirs 10, comme représenté sur la figure 3, ces micro-miroirs 10, à savoir un micromiroir par piste codée du disque 1, étant placés avec le système optique 18 entre la surface 8 de la fibre optique 7 et les pistes codées du disque 1 et chaque micro-miroir 10 pouvant occuper une première position 10a représentée en traits pleins perpendiculaires à la surface 12 du disque 1 et une seconde position 10b représentée en traits interrompus parallèle à cette surface 12 (voir également figure 3), position 10b dans laquelle les rayons 9 sont réfléchis en tant que rayons 11;

- des moyens (non représentés) pour maintenir normalement tous les micro-miroirs 10 dans la seconde position 10b;

- une unité de commande 17 apte à amener, successivement et cycliquement, les micro-miroirs 10, un par un, dans la première position 10a;

- une source d'alimentation autonome 3a constituée avantageusement par une pile électrique, une cellule photovoltaïque alimentée en lumière extérieure par une fibre optique, ou une source d'alimentation locale par microgénération, cette source alimentant l'unité de commande 17; dans le cas d'une source d'alimentation locale par microgénération, celle-ci peut être formée par un système comportant un solénoïde qui entoure un barreau magnétique, des moyens;

- et en particulier une capsule manométrique - pour commander le déplacement relatif solénoïde/barreau magnétique dans le système, des moyens redresseurs dont l'entrée est connectée aux bornes du solénoïde, et des moyens de stockage d'énergie électrique connectés à la sortie desdits moyens redresseurs;

- un lecteur opto-électronique 15 constitué par exemple par un photodétecteur, ce lecteur émettant une impulsion électrique en réponse à une impulsion de lumière 14 reçue à partir de l'extrémité 6 de la fibre 7 après réflexion sur le miroir semi-transparent 4; et

- une unité de traitement 16 des impulsions électriques produites par le lecteur 15.

Le codeur peut également comporter:

- un système optique (non représenté) entre le miroir semi-transparent 14 et la diode 15;

- un piège à lumière 9b dirigé vers la surface 12 du disque codé 1 pour absorber les rayons tels que 9a non réfléchis par un micro-miroir 10 en position 10b et ayant traversé une zone transparente du disque 1 et/ou un piège lumière 11b pour absorber les rayons tels que 11.

En ce qui concerne plus particulièrement les microiroirs 10 et l'unité de commande 17 de ceux-ci, ils peuvent être constitués par des micro-volets réfléchissants en aluminium oscillant autour de leur axe 10c, des ressorts les sollicitant normalement dans une position de repos 10b; par contre l'unité 17 commande l'amenée, l'un après l'autre, te chacun des micro-miroirs à l'autre position, active, 10b.

Les micro-volets 10 et leur unité de commande 19 peuvent être réalisés par exemple comme décrit dans la demande de brevet n° 81 04778 (n° de publication 2 478 352) déposée le 10 mars 1981 par CENTRE ELECTRONIQUE SA, ce qui permet de les obtenir sous la forme d'un élément pouvant être commandé par des impulsions en provenance de l'unité de commande 17 avec une dépense réduite en énergie.

Au cours du fonctionnement un micro-miroir 10 et un seul se trouve en position 10a; pour ce micro-miroir la lumière 9 en provenance de la fibre 7 atteint la piste codée du disque 1 correspondant à ce micro-miroir

- si une zone transparente se trouve en regard de ce miroir la lumière sort sous le disque A en tant que rayonnement 9a, vers le piège éventuel 9b;

- si une zone réfléchissante se trouve en regard de ce miroir la lumière est réfléchie vers la fibre 7 en tant que rayonnement 13, et, à travers la fibre 7, frappe le miroir semi-transparent 4 et est réfléchie en tant que rayonnement 14 qui excite le lecteur 15 qui émet une impulsion électrique vers l'unité de traitement 16.

Les autres micro-miroirs 10 se trouvent en position 10b et la lumière en provenance de la fibre 7 est réfléchie par un tel micro-miroir 10 en tant que rayonnement 11 qui n'atteint pas la fibre 7, mais se dirige vers le piège éventuel 11b.

L'unité de commande 17 amène l'un après l'autre les micro-miroirs en position active 10a et on réalise ainsi une conversion parallèle/série, les pistes étant lues l'une après l'autre et avec émission d'un groupe d'impulsions lumineuses 13 ou d'absences d'impulsion lumineuse (en autant de positions qu'il y a de pistes codées), une impulsion lumineuse 13 correspondant à une zone réfléchissante et une absence d'impulsion à une zone transparente de la piste correspondant à la position en cause. Les lectures successives se manifestent donc par des groupes successifs d'impulsions lumineuses 13 et d'absences d'impulsion, une telle impulsion correspondant donc à une zone réfléchissante.

Les impulsions lumineuses précitées 13 sont tranmises par la fibre optique 7 et renvoyées par le miroir semi-transparent 4 en impulsions de lumière 14 qui sont transformées en impulsions électriques par le lecteur 15, ces dernières étant traitées dans l'unité 16.

Sur la figure 1 on a représenté:

- les unités du capteur A avec le disque codé 1, du câble optique B constituant les moyens de transmission à fibres optiques et du module C avec ses sorties $C_1$ vers les moyens d'utilisation des signaux de sortie du module C; et

- les connecteurs $B_1$ et $B_2$ du câble optique B respectivement avec le capteur A et le module C.

Le fonctionnement du dispositif selon l'invention comporte une première période de mise en service de l'ordre de 0,5 à 1 seconde, dans le cas d'une génération photovoltaïque de courant, mais qui peut être de durée différente pour un autre type de source d'énergie.

Cette période de mise en service est suivie par un premier cycle de travail comportant l'activation de l'émetteur opto-électronique 2 et du lecteur optique à multiplexage, par la série de micro-miroirs. Cette période de travail dure environ 2 ms.

On prévoit ensuite un temps de repos ou de recharge de la source d'énergie qui peut être de l'ordre de 20 ms, temps au bout duquel une nouvelle période de travail peut recommencer.

Il en résulte donc que le cycle travail-repos peut recommencer, par exemple toutes les 22 ms environ.

Pendant chaque cycle de travail les moyens de commande 17 actionnent successivement chaque micro-miroir 10 pour l'amener de sa position 10b à sa position 10a, ce qui permet d'explorer successivement chacune des pistes du disque 1, le lecteur 15 recevant une impulsion de lumière 14 et émettant une impulsion électrique chaque fois que, pour le micro-miroir dans la position 10a, une zone réfléchissante de la piste correspondante se trouve en regard du micro-miroir. Les groupes d'impulsions électriques émis par le lecteur 15 sont traités dans l'unité de traitement 16, successivement pour chacune des pistes codées sélectionnées par l'unité de commande 17. On détecte donc les zones opaques réfléchissantes de chaque piste codé.

Dans une variante illustrée sur la figure 4, les micro-miroirs 10 peuvent avoir une position de repos 10d parallèle à la surface 12 du disque codé 1 et donc renvoyer vers la fibre 7, en tant que rayons 13, la lumière 9 reçue depuis cette fibre lorsqu'ils sont en position de repos 10d. Dans ce cas le piège 11b est inutile.

Comme précédemment, un micro-miroir 10, dans sa position active 10a, laisse passer les rayons 9 vers la piste codée associée; si la zone de cette piste qui reçoit les rayons 9 est transparente elle laisse passer ces rayons en tant

que rayons 9a; si cette zone est opaque ces rayons 9 sont renvoyés vers la fibre optique 7 en tant que rayons 13.

Ce sont donc avec cette variante les zones transparentes de chaque piste codée du disque 1 qui sont détectées du fait que de telles zones sont signalées par l'absence de rayons 13, donc d'impulsion lumineuse 14 et par consequent d'impulsion électrique émise par le lecteur 15.

On peut prévoir un inverseur électrique entre la sortie du lecteur 15 et l'unité de traitement 16.

On voit que la fibre optique 7 et les systèmes opto-électroniques associés servent à la transmission bi-directionnelle à distance sans risques de parasites entre le capteur A et le module G.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

## Revendications

1. Dispositif de repérage de position constitué en trois parties, à savoir:
   - un capteur de données (A) qui coopère avec un élément (1) porteur de code de position comportant des pistes codées optiquement;
   - un module opto-électronique (C) avec une unité électronique de traitement des signaux (16); et
   - des moyens de transmission optique bi-directionnelle (B) à fibre(s) optique(s) (7);
   et dont
   - le module (C) comprend au moins un émetteur opto-électronique de lumière (2); un coupleur bi-directionnel (4) de faisceau optique; et un lecteur opto-électronique (15), associé à l'unité de traitement (16) pour traiter les signaux électriques émis par ce lecteur opto-électronique (15) en réponse à des signaux lumineux (14); l'alimentation de l'émetteur opto-électronique (2) et du lecteur opto-électronique f15) du module étant assurée par des moyens d'alimentation électrique (3); et l'émetteur (2), le coupleur bi-directionnel (4) et le lecteur (15) étant disposés par rapport à une (6) des extrémités des moyens de transmission optique bi-directionnelle (B) de manière que l'émetteur (2) puisse envoyer de la lumière sur cette extrémité (6), grâce à ce coupleur (4), et le récepteur (15) recevoir de la lumière (14) depuis cette extrémité (6), grâce à ce coupleur (4); et
   - ledit capteur (A) comprend, pour coopérer avec l'élément (1) porteur de code de position comportant les pistes codées optiquement une série de micro-miroirs (10) de modulation par réflexion, à savoir un micro-miroir (10) en regard de chaque piste codée et en face de la seconde extrémité (8) desdits moyens de transmission optique bi-directionnelle (B) et pouvant pivoter entre une première position (10a), dans laquelle il laisse passer la lumière (9) en provenance de cette seconde extrémité (8) des moyens de transmission optique (B) pour qu'elle atteigne la piste codée associée et en retour depuis une zone réfléchissante de cette piste codée vers ladite seconde extrémité (7), et une seconde position (10b, 10d), dans laquelle il réfléchit la lumière (9) en provenance de cette seconde extrémité (8);
   - des moyens pour solliciter les micro-miroirs (10) dans la seconde position (10b, 10d); une unité de commande (17) apte à amener, successivement et cycliquement, les micro-miroirs (10), un par un, dans la première position (10a); et une source d'alimentation autonome (3a) alimentant l'unité de commande (17).

2. Dispositif de repérage de position selon la revendication 1, caractérisé en ce qu'un système optique (18) est disposé entre les moyens de transmission optique (B) et les micro-miroirs (10).

3. Dispositif de repérage de position selon la revendication 1 ou 2, caractérisé en ce qu'un système optique est disposé devant le lecteur opto-électronique (15) du module.

4. Dispositif de repérage de position selon l'une quelconque des revendications précédentes, caractérisé en ce qu'un système optique (2a) est disposé entre l'émetteur opto-électronique (2) et les moyens de transmission optique (B).

5. Dispositif de repérage de position selon l'une quelconque des revendications 1 à 4, caractérisé en ce que la source d'alimentation autonome (3a) du capteur (A) est constituée par une pile électrique.

6. Dispositif de repérage de position selon l'une quelconque des revendications 1 à 4, caractérisé en ce que la source d'alimentation autonome (3a) du capteur (A) est constituée par une cellule photovoltaïque.

7. Dispositif de repérage de position selon l'une quelconque des revendications 1 à 4, caractérisé en ce que la source d'alimentation autonome (3a) du capteur (A) est constituée par une source d'alimentation locale par microgénération, formée par un système comportant un solénoïde qui entoure un barreau magnétique, des moyens pour commander le déplacement relatif solenoïde/barreau magnétique dans le système, des moyens redresseurs dont l'entrée est connectée aux bornes du solénoïde, et des moyens de stockage d'énergie sélectrique connectés à la sortie desdits moyens redresseurs.

8. Dispositif de repérage de position selon l'une quelconque des revendications précédentes, caractérisé en ce que les micro-miroirs (10) de modulation par réflexion sont formés par des cicro-volets réfléchissants et leurs moyens de commande associés, en constituant un ensemble.

9. Dispositif de repérage de position selon la revendication 8, caractérisé en ce que les micro-volets réfléchissants sont réalisés en aluminium, qu'ils oscillent autour de leur axe (10c) et qu'ils coopèrent avec des ressorts qui les sollicitent normalement dans la seconde position (10b, 10d).

10. Dispositif de repérage de position selon l'une quelconque des revendications 1 à 9, caractérisé en ce que la seconde position (10b) de chaque micro-miroir (10) est inclinée par rapport à la première position (10a) de celui-ci d'un angle différent de 90°, de manière que dans cette seconde position (10b) chaque micro-miroir (10) renvoie la lumière (9), en provenance de la seconde extrémité (8) des moyens de transmission optique (B), dans une direction (11) telle qu'elle ne soit pas reçue en retour par cette seconde extrémité (8) (figure 3).

11. Dispositif de repérage de position selon l'une quelconque des revendications 1 à 9, caractérisé en ce que la seconde position (10d) de chaque micro-miroir (10) est perpendiculaire à la première position (10a) de celui-ci, de manière que dans cette seconde position (10b) chaque micro-miroir (10) renvoie la lumière (9), en provenance de la seconde extrémité (8) des moyens de transmission optique (B), dans une direction (13) telle qu'elle soit reçue en retour par cette seconde extrémité (8) (figure 4).


**Patentansprüche**

1. Vorrichtung zur Positionsbestimmung, bestehend aus drei Teilen, nämlich:
- einem Sensorgeber (A), der mit einem Trägerelement (1) eines Positionscodes zusammenwirkt, bestehend aus codierten optischen Streifen;
- einem opto-elektronischen Modul (C) mit einer elektronischen Einheit zur Behandlung der Signale (16); und
- Mitteln zur bidirektionellen optischen Übertragung (B) als optische Faser(n) (7); in dem
- das Modul (C) folgende Elemente aufweist: wenigstens einen Emitter (2) von optoelektronischem Licht; einen bidirektionellen Koppler (4) des optischen Bündels; und einen opto-elektronischen Leser (15), der mit einer Behandlungseinheit (16) verbunden ist, um die elektrischen Signale, die durch den opto-elektronischen Leser (15) emittiert werden, zu behandeln als Reaktion auf die Lichtsignale (14); wobei die Speisung des opto-elektronischen Emitters (2) und des opto-elektronischen Lesers (15) des Moduls durch elektrische Versorgungsmittel (3) sichergestellt ist; und wobei der Emitter (2), der bidirektionelle Koppler (4) und der Leser (15) gegenüber einem Ende (6) der bidirektionellen optischen Übertragungsmittel (B) in der Weise ausgerichtet sind, daß der Emitter (2) Licht auf dieses Ende (6) dank des Kopplers (4) werfen kann und der Empfänger (15) Licht (14) neben diesem Ende (6) dank des Kopplers (4) empfangen kann; und
- der Sensor (A) umfaßt, um mit dem Trägerelement (1) des Positionscodes aus den codierten optischen Streifen kooperieren zu können: eine Serie von Mikro-Spiegeln (10) mit einer Reflektionsmodulation, d.h. einen Mikro-Spiegel (10) gegenüber jedem codierten Streifen und gegenüber dem zweiten Ausgang (8) der bidirektionellen optischen Transmissionsmittel (B) und in der Lage, sich zwischen einer ersten Position (10a) zu drehen, in welcher er das Licht (9) aus Richtung dieses zweiten Ausganges (8) der optischen Übertragungsmittel (B) passieren läßt, damit es einen assoziierten codierten Streifen erreichen kann und im Rücklauf von einer Reflektionszone dieses codierten Streifens in Richtung auf den zweiten Ausgang (8), und zwischen einer zweiten Position (10b, 10d), in welcher er das Licht (9) reflektiert, welches aus dem zweiten Ausgang (8) austritt;
- Mittel, um diesen Mikro-Spiegel (10) in der zweiten Position (10b, 10d) zu beanspruchen; eine Steuereinheit (17), die geeignet ist, fortlaufend und zyklisch die Mikro-Spiegel (10) einen nach dem anderen in die erste Position (10a) zu führen; und eine autonome Versorgungsquelle (3a) zur Versorgung der Steuereinheit (17).

2. Vorrichtung zur Positionsbestimmung nach Anspruch 1, dadurch gekennzeichnet, daß ein optisches System (18) zwischen den optischen Transmissionsmitteln (B) und den Mikro-Spiegeln (10) angeordnet ist.

3. Vorrichtung zur Positionsbestimmung nach Anspruch 1 oder 2, dadurch gekennzeichnet, daß ein optisches System vor dem opto-elektronischen Leser (15) des Moduls angeordnet ist.

4. Vorrichtung zur Positionsbestimmung nach Anspruch 1 oder einem der folgenden Ansprüche, dadurch gekennzeichnet, daß ein optisches System (2a) zwischen dem opto-elektronischen Emitter (2) und den optischen Übertragungsmitteln (B) angeordnet ist.

5. Vorrichtung zur Positionsbestimmung nach einem der Ansprüche 1 bis 4, dadurch gekennzeichnet, daß die autonome Versorgungsquelle (3a) des Sensors (A) von einer elektrischen Zelle gebildet ist.

6. Vorrichtung zur Positionsbestimmung nach einem der Ansprüche 1 bis 4, dadurch gekennzeichnet, daß die autonome elektrische Quelle (3a) des Sensors (A) von einer Fotozelle gebildet ist.

7. Vorrichtung zur Positionsbestimmung nach einem der Ansprüche 1 bis 4, dadurch gekennzeichnet, daß die autonome elektrische Quelle (3a) des Sensors (A) von einer lokalen Versorgungsquelle der Mikrogeneration gebildet ist, gebildet von einem System, welches einen Solenoid umfaßt, der einen magnetischen Stab umgibt, Mittel zur Steuerung der Lageveränderung relativ zwischen Solenoid und magnetischem Stab in dem System, Gleichrichtermittel, deren Eingang mit den Klemmen des Solenoides verbunden ist und mit Speichermitteln für elektrische Energie, die verbunden sind mit dem Ausgang der genannten Gleichrichtermittel.

8. Vorrichtung zur Positionsbestimmung nach einem der vorangehenden Ansprüche,

dadurch gekennzeichnet,

daß die Mikro-Spiegel (10) der Modulation durch Reflektion von reflektierenden Mikro-Flügeln und deren zugeordneten Steuerungsmitteln, wobei sie damit eine Einheit bilden, gebildet werden.

9. Vorrichtung zur Positionsbestimmung nach Anspruch 8,

dadurch gekennzeichnet,

daß die reflektierenden Mikro-Flügel aus Aluminium bestehen, daß sie um ihre Achse (10c) oszillieren und daß sie mit Federn zusammenwirken, die sie normalerweise in der zweiten Position (10b, 10d) festlegen.

10. Vorrichtung zur Positionsbestimmung nach einem der Ansprüche 1 bis 9,

dadurch gekennzeichnet,

daß die zweite Position (10b) jedes Mikro-Spiegels (10) in Bezug auf die erste Position (10a) in einem Winkel unterschiedlich von 90°, in einer Weise geneigt ist, daß in dieser zweiten Position (10b) jeder Mikro-Spiegel (10) das Licht, welches aus dem zweiten Ende (8) der optischen Transmissionsmittel (B) kommt, in eine Richtung (11) reflektieren, so daß sie nicht auf dem Rückweg durch dieses zweite Ende (8) aufgenommen werden (Fig. 3).

11. Vorrichtung zur Positionsbestimmung nach einem der Ansprüche 1 bis 9,

dadurch gekennzeichnet,

daß die zweite Position (10d) jedes Mikro-Spiegels (10) rechtwinklig zur ersten Position (10a) ist, derart, daß in dieser zweiten Position (10d) jeder Mikro-Spiegel (10) das Licht (9), das aus dem zweiten Ende (8) der optischen Übertragungsmittel (B) kommt, in eine Richtung (13) zurückreflektiert, derart, daß es auf dem Rückweg von diesem zweiten Ende (8) aufgenommen wird (Fig. 4).

**Claims**

1. A position detector having three parts, namely:
- a data collector (A) co-operating with a position-code-carrying element (1) having optically encoded tracks;
- an optaical-electronic module (C) having an electronic signal-processing unit (10), and
- optical two-way transmission means (B) having one or more optical fibres (7);

wherein:
- the module (C) comprises at least one optical-electronic light transmitter (2), a two-way optical beam coupler (4) and an optical-electronic reader (15) associated with the processing unit (16) for processing the electrical signals output by the reader (15) in response to light signals (14), the optical-electronic transmitter (2) and the optical energization means (3), the transmitter (2), coupler (4) and reader (15) being so disposed relatively to one (6) of the ends of the two-way optical transmission means (B) that the transmitter (2) can transmit the light to the end (B) by way of the coupler (4) and the receiver (15) can receive light (14) from the end (6) by way of hte coupler (4); and
- the coollector (A) comprises, for co-operation with the position code-carrying element (1), a number of reflection modulation micromirrors (10), via one micromirror (10) opposite each encoded track and near the second end (8) of the two-way optical transmission means (B), the micromirror (10) being pivotable between a first position (10a) in which it passes the light (9) from the second end (8) of the optical transmission means (B) so that it can reach the associated encoded track and return from a reflecting zone thereof of the second end (7), and a second position (10b, 10d) in which it reflects the light (9) coming from said second end (8), and
- means for urging the micromirrors (10) into the second position (10b, 10d); a control unit (17) for consecutively and cylically moving the micromirrors (10) one at a time into the first position (10a); and an indepent power supply (3a) supplying the control unit (17).

2. A detector according to claim 1, characterised in that an optical system (18) is disposed between the optical transmission means (B) and the micromirrors (10).

3. A detector according to claim 1 or 2, characterised in that an optical system is disposed before the optical-electronic reader (15) of the module.

4. A detector according to any of the previous claims, characterised in that an optical system (2a) is disposed between the optical-electronic transmitter (2) and the optical transmission means (B).

5. A detector according to any of claims 1 - 4, characterised in that the independent power supply (3a) of the collector (A) is in the form of an electric cell.

6. A detector according to any of claims 1 - 4, characterised in that the independent power supply (3a) of the collector (A) is in the form of an photovoltaic cell.

7. A detector according to any of claims 1 - 4, characterised in that the independent power supply (3a) of the collector (A) is in the form of a local microgeneration power supply embodied by a system comprising; a solenoid disposed around a magnetic rod; means for controlling relative movement between the solenoid ans such rod in the system; rectifying means whose input is connected to the solenoid terminals; and electricity-storage means connected to the output of the rectifier means.

8. A detector according to any of the previous claims, characterised in that the micromirrors (10) are embodied by reflecting micro-flaps and their associated control means forming a whole.

9. A detector according to claim 8, characterised in that the reflecting micro-flaps are made of aluminium, oscillate around their axis (10c) and co-operate with springs urging them normally into the second position (10b, 10d).

10. A detector according to any of claims 1 - 9, characterised in that the second position (10b) of each micromirror (10) is inclined relatively to the first position (10a) thereof by an angle other than 90° so that in the second position (10b) each micromirror (10) reflects the light (9) coming from the second end (8) of the optical transmission means (B) in a direction (11) such that such light is not reveived on its return by the said second end (8) (Fig. 3).

11. A detector according to any of claims 1 - 9, characterised in that the second position (10b) of each micromirror (10) is perpendicular to the first position (10d) thereof so that in this second position (10d) each micromirror (10) reflects the light (9) coming from the second end (8) of the optical transmission means (B) in a direction (13) such that such light is received on its return by the second end (8) (Fig. 4).

# FIG.1.

# FIG.2.

# FIG.3.

# FIG.4.